# EUROPEAN PATENT APPLICATION

(11) **EP 4 847 666 A1**
(43) Date of publication of application: **02.12.2026**
(21) Application number: 24918127.2
(22) Date of filing: 11.10.2024
(51) Int. Cl.: C25B 9/00, C25B 1/04, C25B 9/19

(54) **SYSTEM FOR PERFORMING ELECTROCHEMICAL REACTION**

(30) Priority: 15.01.2024 CN 202410054698
(71) Applicant: Aqualux Limited, Hong Kong (HK)
(72) Inventor: FAN, Hua, Hong Kong (CN)
(74) Representative: Petraz, Gilberto Luigi
(86) International application number: PCT/CN2024/124168
(87) International publication number: WO 2025/152518

(57) **Abstract**

A system for an electrochemical reaction is provided, including: at least one electrochemical reaction subsystem, where the at least one electrochemical reaction subsystem includes: a first electrode; a second electrode; and a microchannel unit that is arranged between the first electrode and the second electrode and configured for an electrolyte to flow therethrough, where sidewalls of the microchannel unit that face the first electrode and the second electrode respectively each have a microporous structure; and the microchannel unit is configured to possess rigidity satisfying a predetermined condition to avoid deformation of the microchannel unit during the electrochemical reaction.

## Description

### TECHNICAL FIELD

The embodiments of the present disclosure generally relate to the field of electrochemistry, and specifically relate to a system for an electrochemical reaction.

### BACKGROUND

Water electrolysis is an important method for hydrogen production. When traditional systems for electrochemical reactions perform water electrolysis, hydrogen and oxygen are typically generated in the form of bubbles on the surfaces of respective electrodes, which easily causes bubble-induced resistance. Such bubble-induced resistance hinders water electrolysis, resulting in low hydrogen production efficiency. In addition, the generated hydrogen may pass through a diaphragm and mix with oxygen, posing a potential risk of explosion.

In summary, when performing water electrolysis, traditional systems for electrochemical reactions demonstrate the following disadvantages: Bubble-induced resistance is prone to occur at electrodes, resulting in low hydrogen production efficiency. Moreover, there is a risk of hydrogen-oxygen mixing.

### SUMMARY

In view of the above problems, the present disclosure provides a system for an electrochemical reaction. When the system of the present disclosure is used to perform water electrolysis, a microchannel unit can be prevented from deformation under a small interelectrode spacing, avoiding hydrogen-oxygen mixing. Additionally, bubble-induced resistance at electrodes can be significantly reduced to improve hydrogen production efficiency.

According to a first aspect of the present disclosure, a system for an electrochemical reaction is provided, including: at least one electrochemical reaction subsystem, where the at least one electrochemical reaction subsystem includes: a first electrode; a second electrode; and a microchannel unit that is arranged between the first electrode and the second electrode and configured for flowing of electrolytes, where sidewalls of the microchannel unit that face the first electrode and the second electrode respectively each have a microporous structure; and the microchannel unit is configured to possess rigidity satisfying a predetermined condition to avoid deformation of the microchannel unit during the electrochemical reaction.

In some embodiments, the microchannel unit includes a plurality of channels, such that an electrolyte flowing in from a first end of the microchannel unit flows out from a second end of the microchannel unit through the plurality of channels.

In some embodiments, the first end of the microchannel unit is located above the second end of the microchannel unit. In some embodiments, the plurality of channels are each made of at least one selected from the group consisting of a metal, a ceramic, and a rigid plastic.

In some embodiments, the microchannel unit includes a fluid flow guide piece and a porous membrane covering an outer surface of the fluid flow guide piece.

In some embodiments, the fluid flow guide piece is made of a metal foam or a ceramic foam.

In some embodiments, a pore size of the fluid flow guide piece is larger than a pore size of the porous membrane. In some embodiments, the pore size of the fluid flow guide piece is 10 µm to 2,000 µm and preferably 50 µm to 200 µm. In some embodiments, the pore size of the porous membrane is no more than 100 µm and preferably 1 µm to 20 µm.

In some embodiments, the system for an electrochemical reaction further includes a flow distribution unit, where the flow distribution unit is connected to the first end of the microchannel unit, such that an electrolyte is capable of being uniformly distributed through the flow distribution unit to the microchannel unit.

In some embodiments, the flow distribution unit includes a distribution chamber and a distribution array. In these embodiments, the distribution array is located between the distribution chamber and the microchannel unit.

In some embodiments, the distribution array includes a plurality of spaced openings.

In some embodiments, the first electrode and the second electrode are both gas diffusion electrodes. In some embodiments, a distance between the first electrode and the second electrode is no more than 2 mm and preferably no more than 1 mm.

In some embodiments, the system according to the first aspect of the present disclosure is an electrolytic cell.

In some embodiments, the system according to the first aspect of the present disclosure is a fuel cell.

According to a second aspect of the present disclosure, a method for conducting an electrochemical reaction using the system according to the first aspect of the present disclosure is provided, including: supplying the electrolyte such that the electrolyte is uniformly introduced into the microchannel unit; and allowing the electrolyte to exude through the microporous structures on the sidewalls of the microchannel unit to come into contact with the first electrode and the second electrode.

It should be understood that the content described in this section is not intended to either identify key or essential features of the embodiments of the present disclosure or limit the scope of the present disclosure. Other features of the present disclosure will become readily understandable through the following description.

### BRIEF DESCRIPTION OF THE DRAWINGS

The above and other features, advantages, and aspects of various embodiments of the present disclosure will become apparent with reference to the accompanying drawings and the following detailed description. In the accompanying drawings, same or similar reference numerals denote same or similar elements.
FIG. 1A is a schematic diagram of a system for an electrochemical reaction;
FIG. 1B is a schematic diagram of another system for an electrochemical reaction;
FIG. 2 is a schematic diagram of a system for an electrochemical reaction according to an embodiment of the present disclosure;
FIG. 3A is a schematic diagram of an exemplary structure of a plurality of channels within a microchannel unit according to an embodiment of the present disclosure;
FIG. 3B is a schematic diagram of another exemplary structure of the plurality of channels within the microchannel unit according to the embodiment of the present disclosure;
FIG. 4 is a schematic diagram of a microchannel unit according to an embodiment of the present disclosure;
FIG. 5 is a schematic diagram of a flow distribution unit according to an embodiment of the present disclosure; and
FIG. 6 is a schematic diagram of a system for an electrochemical reaction according to another embodiment of the present disclosure.

### DETAILED DESCRIPTION OF THE EMBODIMENTS

The exemplary embodiments of the present disclosure are described below with reference to the accompanying drawings. Various details of the embodiments of the present disclosure are included to facilitate understanding and shall be regarded as merely illustrative. Therefore, those of ordinary skill in the art should recognize that various changes and modifications may be made to the embodiments described herein without departing from the scope and spirit of the present disclosure. Likewise, descriptions of well-known functions and structures are omitted below for clarity and conciseness.

As used herein, the term "include" or a variation thereof indicates an open-ended inclusion, namely, "including, but not limited to". Unless stated otherwise, the term "or" means "and/or". The term "based on" means "at least partially based on". The terms "an exemplary embodiment" and "an embodiment" mean "at least one exemplary embodiment". The term "another embodiment" means "at least one additional embodiment". The terms "first", "second", etc. may refer to different or same objects. Other explicit and implicit definitions may also be included below.

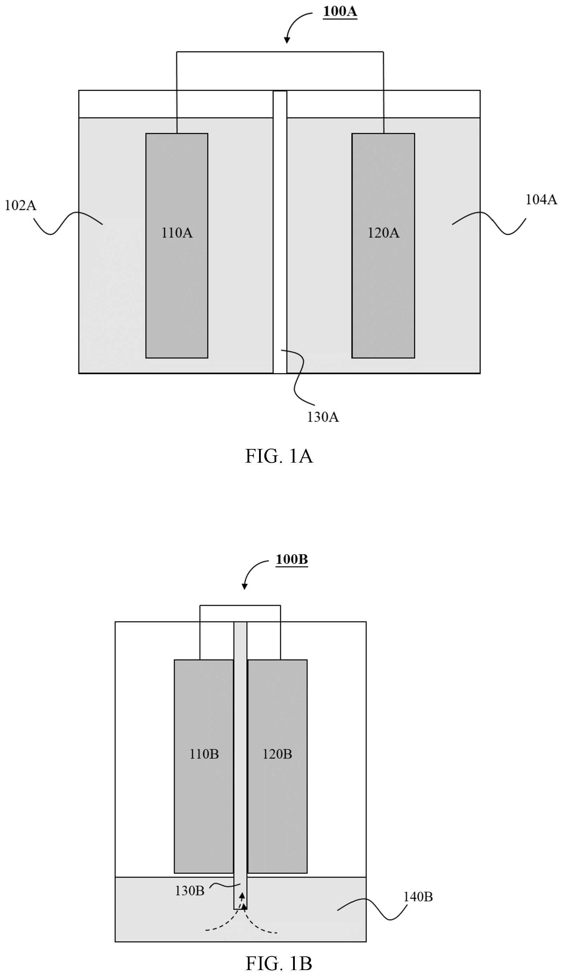

Water electrolysis is a major method for producing hydrogen based on an electrochemical reaction. Alkaline water electrolysis is widely utilized in the industry due to its low cost and high technological maturity. In traditional solutions for alkaline water electrolysis, an electrochemical reaction system (also known as an alkaline electrolytic cell) 100A shown in FIG. 1A is generally employed.

FIG. 1A is a schematic diagram of a system 100A for an electrochemical reaction. As shown in FIG. 1A, the system 100A includes a first electrode 110A, a second electrode 120A, and a diaphragm 130A. The diaphragm 130A divides the system 100A into a first chamber 102A and a second chamber 104A. When water electrolysis is conducted using the system 100A, an electrolyte (such as potassium hydroxide or sodium hydroxide) is introduced into the first chamber 102A and the second chamber 104A, and the first electrode 110A and the second electrode 120A are completely immersed in the electrolyte, such that oxygen and hydrogen are generated respectively on surfaces of the first electrode 110A and the second electrode 120A. For example, when the first electrode 110A serves as an anode and the second electrode 120A serves as a cathode, during the electrochemical reaction of water electrolysis, an oxygen evolution reaction shown in the following formula (1) occurs at the first electrode 110A:

4OH⁻→2H₂O + O₂ + 4e⁻ (1),

and
a hydrogen evolution reaction shown in the following formula (2) occurs at the second electrode 120A:

2H₂O + 4e⁻→H₂ + 2OH⁻ (2).

However, as shown in FIG. 1A, hydrogen and oxygen are generated in the form of bubbles on the surfaces of respective electrodes, which easily causes bubble-induced resistance. Such bubble-induced resistance hinders the electrochemical reaction, resulting in low hydrogen production efficiency. Moreover, although the diaphragm 130A (such as an asbestos diaphragm, a polyphenylene sulfide (PPS) diaphragm, a composite diaphragm, or other diaphragms) is provided in the system 100A to prevent hydrogen-oxygen mixing, due to the hydrogen-to-oxygen production ratio of 2:1, pressure balance shall always be maintained between the first chamber 102A and the second chamber 104A at two sides of the diaphragm 130A. Otherwise, once pressure imbalance occurs between the two chambers, excessive hydrogen will pass through the diaphragm 130A and mix with oxygen, thereby posing a risk of explosion.

Alternatively, in the prior art, an electrolyte may be brought into contact with electrodes using a porous capillary tube based on the capillary effect. FIG. 1B is a schematic diagram of another system 100B for an electrochemical reaction.

As shown in FIG. 1B, the system 100B includes a first electrode 110B, a second electrode 120B, a porous capillary tube 130B, and an electrolyte container 140B. The porous capillary tube 130B is located between the first electrode 110B and the second electrode 120B. A bottom end of the porous capillary tube 130B extends into the electrolyte container 140B. When water electrolysis is conducted using the system 100B, based on the capillary effect, an electrolyte in the electrolyte container 140B spontaneously enters the porous capillary tube 130B and rises along the porous capillary tube 130B to a specified height to be in contact with the first electrode 110B and the second electrode 120B, thereby enabling the generation of oxygen and hydrogen, respectively.

However, the electrolyte can only rise in the porous capillary tube 130B based on the capillary effect for a limited height, which limits a size of the system 100B. In addition, as shown in FIG. 1B, since the porous capillary tube 130B is arranged between the first electrode 110B and the second electrode 120B, if a distance between the first electrode 110B and the second electrode 120B is small or if the two electrodes are arranged relatively closely at two sides of the porous capillary tube 130B, it is difficult for surfaces of the electrodes to be completely flat. As a result, the structure of the porous capillary tube 130B may be easily ruptured or may be compressed, deformed, or even completely closed, thereby compromising the capillary effect. Further, the generated oxygen and hydrogen are essentially isolated by the electrolyte in the porous capillary tube 130B. Consequently, if the rise of the electrolyte within the porous capillary tube 130B is discontinuous, for example, if the electrolyte fails to rise along the porous capillary tube 130B to the specified height or if voids are formed in the electrolyte within the porous capillary tube 130B, there will be a risk of hydrogen-oxygen mixing.

In summary, the existing system for an electrochemical reaction described above demonstrates the following disadvantages: Due to a large interelectrode spacing, bubble-induced resistance is prone to occur at the electrodes, resulting in low hydrogen production efficiency. Moreover, there is a risk of hydrogen-oxygen mixing.

To at least partially solve the above problems and one or more of other potential problems, an exemplary embodiment of the present disclosure provides a system for an electrochemical reaction. In at least one electrochemical reaction subsystem included in the system, a microchannel unit that has rigidity satisfying a predetermined condition and is configured for flowing of electrolytes is provided between the first electrode and the second electrode, and the microchannel unit can be prevented from deformation during the electrochemical reaction. In this way, the first electrode and the second electrode can be closely arranged at opposite sides of the microchannel unit, thereby reducing an interelectrode spacing. Further, an electrolyte is allowed to fully fill the microchannel unit to form a liquid barrier, avoiding hydrogen-oxygen mixing. In addition, the electrolyte is allowed to exude through microporous structures on sidewalls of the microchannel unit and come into contact with the electrodes, which can significantly reduce the occurrence of bubble-induced resistance at the electrodes and thus improve hydrogen production efficiency.

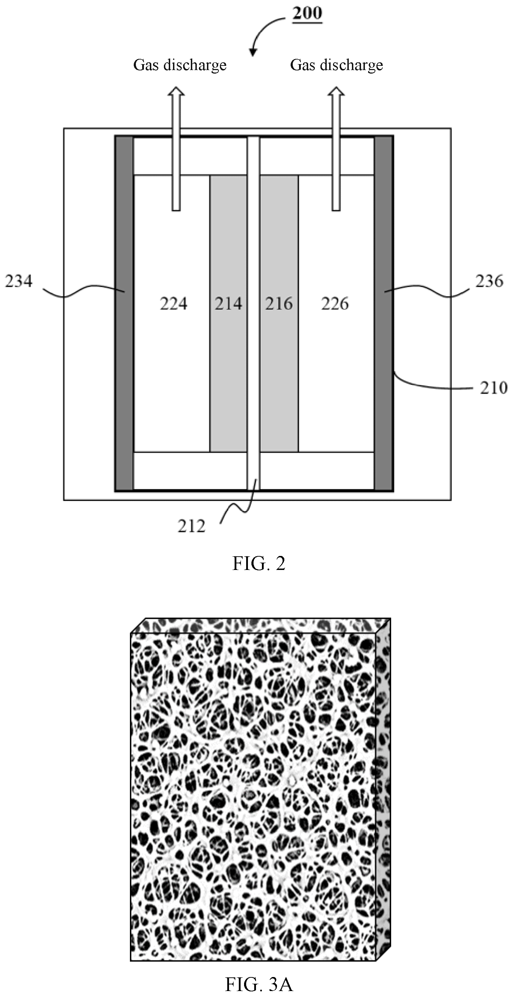

A solution for conducting an electrochemical reaction according to an embodiment of the present disclosure will be described in detail below with reference to FIG. 2 to FIG. 6.

FIG. 2 is a schematic diagram of a system 200 for an electrochemical reaction according to an embodiment of the present disclosure.

As shown in FIG. 2, the system 200 includes an electrochemical reaction subsystem 210. The electrochemical reaction subsystem 210 may include a first electrode 214, a second electrode 216, and a microchannel unit 212.

The first electrode 214 and the second electrode 216 may be in contact with an electrolyte to facilitate the generation of respective gases. According to an embodiment of the present disclosure, the electrolyte may be, for example, a sodium hydroxide solution. If the first electrode 214 serves as an anode and the second electrode 216 serves as a cathode, as described above, oxygen is generated at the first electrode 214 and hydrogen is generated at the second electrode 216.

According to an embodiment of the present disclosure, to facilitate diffusion and discharge of the gases generated at the electrodes to avoid bubble-induced resistance, a gas diffusion layer may be provided on a side of each electrode away from the microchannel unit 212. As shown in FIG. 2, a first gas diffusion layer 224 is provided on a side of the first electrode 214 away from the microchannel unit 212, and a second gas diffusion layer 226 is provided on a side of the second electrode 216 away from the microchannel unit 212. In this embodiment, a gas (such as oxygen) generated at the first electrode 214 can be diffused through the first gas diffusion layer 224 and discharged from the electrochemical reaction subsystem 210, for example, into an external pipeline (not shown) for transporting oxygen. Similarly, a gas (such as hydrogen) generated at the second electrode 216 can be diffused through the second gas diffusion layer 226 and discharged from the electrochemical reaction subsystem 210, for example, into an external pipeline (not shown) for transporting hydrogen.

According to yet some embodiments of the present disclosure, the electrodes may also be gas diffusion electrodes. For example, the first electrode 214 and the second electrode 216 shown in FIG. 2 are both gas diffusion electrodes, such that gases generated at the electrodes can be sufficiently diffused through the gas diffusion electrodes.

Gas diffusion electrodes with abundant through holes and high porosity are preferably employed, such that diffusion effects of gases in the electrodes are improved. Consequently, the gases can be sufficiently discharged from the electrochemical reaction subsystem 210 to an outside.

In yet some embodiments, when the electrodes are gas diffusion electrodes with sufficiently large thicknesses, the electrodes themselves can serve as gas diffusion layers. In other words, the gas diffusion electrodes may replace the combined structures of electrodes and gas diffusion layers described above. Therefore, in these embodiments, the gas diffusion layer may be omitted.

As shown in FIG. 2, the microchannel unit 212 is located between the first electrode 214 and the second electrode 216 and configured for flowing of electrolytes. According to some embodiments of the present disclosure, the electrolyte may flow in from a top of the microchannel unit 212 and flow out from a bottom of the microchannel unit 212.

According to an embodiment of the present disclosure, sidewalls of the microchannel unit 212 that face the first electrode 214 and the second electrode 216 respectively each have a microporous structure, such that an electrolyte flowing into the microchannel unit 212 can exude through the microporous structures and come into contact with the electrodes. In some embodiments, the microporous structures on the sidewalls of the microchannel unit 212 may have a pore size of 1 µm to 100 µm.

According to the inventive concept of the present disclosure, the microchannel unit 212 is further configured to have rigidity meeting a predetermined condition, which can avoid deformation of the microchannel unit 212 during the electrochemical reaction.

The rigidity meeting the predetermined condition means that, when the electrolyte in the microchannel unit 212 exudes and undergoes electrolytic reactions with the electrodes (namely, the first electrode 214 and the second electrode 216), a shape of the microchannel unit 212 remains unchanged, preventing excessive deformation of the microchannel unit 212 due to pressures from the first electrode 214 and the second electrode 216. In other words, the phenomenon where local voids without the electrolyte are formed within the microchannel unit 212 because the electrolyte fails to fully fill the microchannel unit 212 due to excessive local deformation of the microchannel unit 212 is avoided, thereby preventing a risk of hydrogen-oxygen mixing in these local voids.

According to some embodiments of the present disclosure, microchannels may be provided in the microchannel unit 212 to support the shape of the microchannel unit 212, such that the microchannel unit 212 has the rigidity satisfying the predetermined condition to avoid deformation. For example, in some embodiments, the microchannel unit 212 can include a plurality of channels, such that an electrolyte flowing in from a first end of the microchannel unit 212 can flow out from a second end of the microchannel unit 212 through the plurality of channels. In yet some embodiments, the electrolyte may also flow into the microchannel unit 212 simultaneously from the first end and the second end of the microchannel unit 212.

Further, in some embodiments, the electrolyte may be driven to flow through the microchannel unit by external forces such as liquid gravity and/or hydraulic pressure provided by a pump or valve, such that the electrolyte fully fills the entire microchannel unit and voids are prevented from being formed in the electrolyte within the microchannel unit. In this case, the first end of the microchannel unit may be located above the second end of the microchannel unit, such that the electrolyte can flow in from an upper port of the microchannel unit and flow out from a lower port of the microchannel unit through the plurality of channels.

The plurality of channels may refer to fluid channels with a relatively small thickness. According to an embodiment of the present disclosure, the plurality of channels may have a thickness of no more than 1 mm and preferably no more than 0.5 mm, such as 0.2 mm or 0.02 mm. By allowing the electrolyte to flow through channels with a relatively small thickness in the microchannel unit 212, the present disclosure enables controllable flowing of the electrolyte, thereby facilitating the control of exudation of the electrolyte from the microchannel unit to react with the electrodes. In other words, the controllability of the electrochemical reaction can be enhanced. Further, since the plurality of channels have a relatively small thickness, the microchannel unit 212 correspondingly has a relatively small thickness, which enables a small interelectrode spacing for the system 200. In some embodiments, the plurality of channels may be microfluidic channels, such that an electrolyte flowing through the microchannel unit 212 exhibits microfluidic properties.

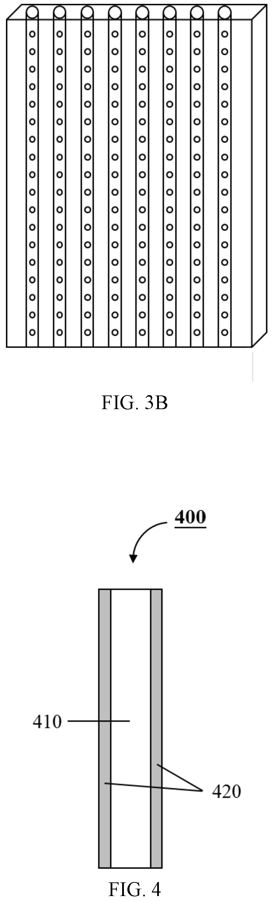

According to some embodiments of the present disclosure, the plurality of channels in the microchannel unit 212 may have an irregular structure. For example, the plurality of channels may be presented as a three-dimensional grid-like or sponge-like structure. According to yet some embodiments of the present disclosure, the plurality of channels in the microchannel unit 212 may have a regular structure. For example, the plurality of channels may be arranged in parallel. FIG. 3A and FIG. 3B exemplarily show structures of the plurality of channels in the microchannel unit 212. Specifically, FIG. 3A shows a sponge-like irregular structure of the plurality of channels within the microchannel unit, and FIG. 3B shows a regular structure of the plurality of channels arranged in parallel within the microchannel unit.

According to an embodiment of the present disclosure, the plurality of channels may be made of a material such as a metal, a ceramic, or a rigid plastic or an alkali-resistant rigid material suitable for channel fabrication, thereby achieving supporting of the shape of the microchannel unit 212 and preventing deformation of the microchannel unit 212.

According to other embodiments of the present disclosure, the microchannel unit 212 may also have a "sandwich" structure shown in FIG. 4. Details will be given below with reference to FIG. 4, and will not be elaborated here.

As described above, in the system 200 for the electrochemical reaction according to the embodiment of the present disclosure, since the microchannel unit 212 in the electrochemical reaction subsystem 210 has the rigidity satisfying the predetermined condition, the first electrode 214 and the second electrode 216 can be closely arranged at two sides of the microchannel unit 212 without causing excessive deformation of the microchannel unit 212 due to compression from the first electrode 214 and the second electrode 216, thereby achieving a small interelectrode spacing.

According to an embodiment of the present disclosure, a distance between the first electrode 214 and the second electrode 216 may be, for example, no more than 2 mm. In yet some embodiments, the distance between the first electrode 214 and the second electrode 216 may be no more than 1 mm, such as 0.8 mm.

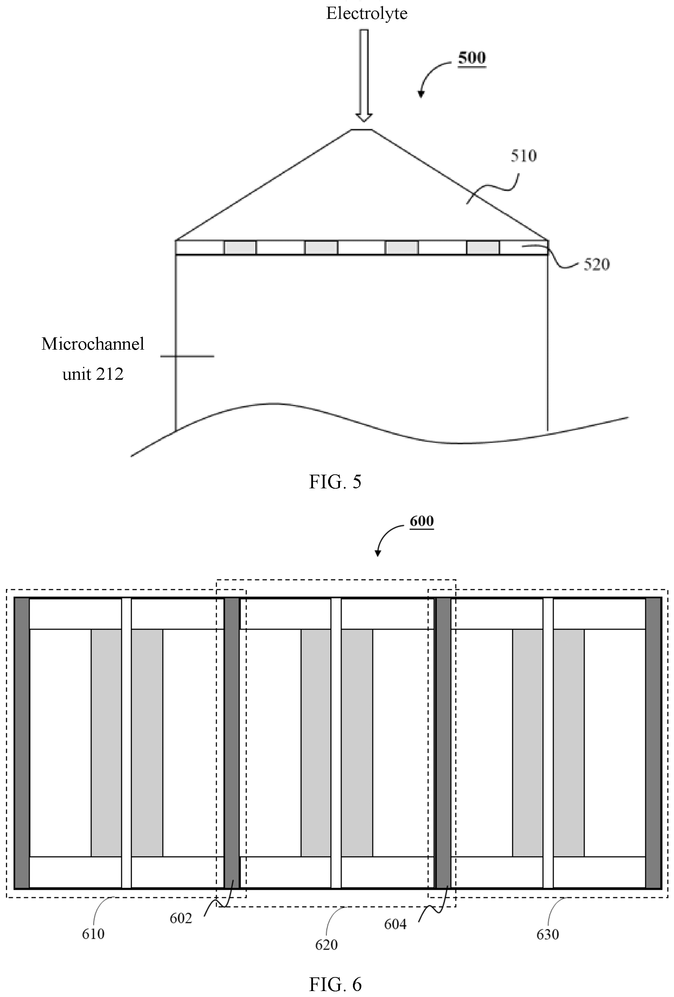

As shown in FIG. 2, the electrochemical reaction subsystem 210 may further include a first bipolar plate 234 and a second bipolar plate 236. The first bipolar plate 234 is arranged on an outer side of the first gas diffusion layer 224, namely, a side of the first gas diffusion layer 224 away from the first electrode 214. The second bipolar plate 236 is arranged on an outer side of the second gas diffusion layer 226, namely, a side of the second gas diffusion layer 226 away from the second electrode 216. With the bipolar plates, a plurality of the electrochemical reaction subsystems can be stacked to form a system for an electrochemical reaction that includes the plurality of the electrochemical reaction subsystems, which will be described below with reference to FIG. 6 and will not be elaborated here.

According to an embodiment of the present disclosure, metal bipolar plates may be employed. For example, both the first bipolar plate 234 and the second bipolar plate 236 are metal bipolar plates.

When water electrolysis is conducted using the system 200 for the electrochemical reaction according to the embodiment of the present disclosure, an electrolyte flowing into the microchannel unit 212 can slowly exude through the microporous structures on the sidewalls of the microchannel unit 212 and come into contact with the first electrode 214 and the second electrode 216 at two sides of the microchannel unit 212, so as to generate hydrogen and oxygen, respectively. Since the microchannel unit 212 allows the slowly permeating electrolyte to come into contact with the electrodes, gases generated at the electrodes can be in effective contact with gas cavities in chambers where the electrodes are located, lowering the possibility of bubble-induced resistance at the electrodes. Moreover, since the microchannel unit 212 has the rigidity satisfying the predetermined condition, the microchannel unit 212 can still maintain the internal channels unobstructed even when an interelectrode spacing is small. Consequently, the electrolyte can fully flow through the channels.

FIG. 4 is a schematic diagram of a microchannel unit 400 with a "sandwich" structure according to an embodiment of the present disclosure. As shown in FIG. 4, the microchannel unit 400 may include a fluid flow guide piece 410 and a porous membrane 420. The porous membrane 420 covers an outer surface of the fluid flow guide piece 410.

The fluid flow guide piece 410 may be a fluid flow guide piece with rigidity satisfying a predetermined condition, such that the fluid flow guide piece 410 does not deform due to pressures from the electrodes at two sides. According to an embodiment of the present disclosure, the fluid flow guide piece 410 may be made of a material that does not react with an electrolyte and exhibits long-term stability. For example, the fluid flow guide piece 410 may be made of a metal foam (such as nickel foam) or a ceramic foam. According to some embodiments of the present disclosure, the fluid flow guide piece 410 may also be a microfluidic flow guide piece.

The porous membrane 420 may be a membrane with numerous pores and stable chemical properties, for example, a polymer membrane with a specified number of uniformly distributed pores. According to an embodiment of the present disclosure, the porous membrane 420 may be a porous membrane with strong alkali resistance. In some embodiments, the porous membrane 420 may be, for example, a polyethersulfone (PES) porous membrane, a melamine porous membrane, or other suitable porous membranes.

The outer surface of the fluid flow guide piece 410 refers to a lateral outer surface of the fluid flow guide piece 410. According to an embodiment of the present disclosure, the porous membrane 420 covers an outer surface of the fluid flow guide piece 410 facing an electrode.

According to the inventive concept of the present disclosure, in some embodiments, a pore size of the fluid flow guide piece 410 can be different from a pore size of the porous membrane 420. For example, the pore size of the fluid flow guide piece 410 may be larger than the pore size of the porous membrane 420. As a result, the electrolyte can fully flow through the fluid flow guide piece 410, and the electrolyte in the fluid flow guide piece 410 can slowly exude from the porous membrane 420 to come into contact with an electrode. For example, the pore size of the fluid flow guide piece 410 can be 10 µm to 2,000 µm and preferably 50 µm to 200 µm, such as 100 µm. For example, the pore size of the porous membrane 420 can be no more than 100 µm and preferably 1 µm to 20 µm, such as 5 µm.

According to the inventive concept of the present disclosure, the microchannel unit 400 may be integrally formed or separately formed, which is not limited herein.

According to an embodiment of the present disclosure, a cross section of the microchannel unit 400 may be rectangular.

Further, in order to guarantee the full filling of the electrolyte into the microchannel unit to form a liquid barrier, the system for the electrochemical reaction according to the embodiment of the present disclosure may further include a flow distribution unit, such that the electrolyte can first flow into the flow distribution unit and then be further distributed through the flow distribution unit to the microchannel unit. Specifically, in some embodiments, the flow distribution unit may be connected to an end of the microchannel unit (such as the microchannel unit 212 in FIG. 2 or the microchannel unit 400 in FIG. 4), such that the electrolyte can be uniformly distributed through the flow distribution unit to the microchannel unit.

FIG. 5 is a schematic diagram of a flow distribution unit 500 according to an embodiment of the present disclosure. The flow distribution unit 500 may be connected to an end of the microchannel unit 212 as shown in FIG. 2.

As shown in FIG. 5, the flow distribution unit 500 may include a distribution chamber 510 and a distribution array 520. The distribution array 520 may be located between the distribution chamber 510 and the microchannel unit 212.

An end of the distribution chamber 510 may be connected to a pipeline for delivering an electrolyte. When the electrolyte in the pipeline flows into the distribution chamber 510, a flow cross-section of the electrolyte may be expanded by the distribution chamber 510. According to an embodiment of the present disclosure, a cross-sectional area of a bottom end of the distribution chamber 510 may be the same as a cross-sectional area of the microchannel unit 212. In this case, a flow cross-section of the electrolyte flowing into the distribution chamber 510 may be expanded to have an area the same as the cross-sectional area of the microchannel unit 212.

The distribution array 520 may be used to equalize a pressure of the electrolyte with a flow cross-section expanded and to allow the electrolyte to flow dispersedly into the microchannel unit 212, thereby achieving the full filling of the electrolyte into the entire microchannel unit 212. Specifically, with the distribution array 520, a uniform flow field of the electrolyte can be well formed. Accordingly, the electrolyte flowing into the microchannel unit 212 uniformly flows through the plurality of channels in the microchannel unit 212, thereby avoiding non-uniform internal resistance caused by non-uniform electrolyte concentrations at different sites during the electrochemical reaction. According to some embodiments of the present disclosure, the distribution array 520 may include a plurality of spaced openings.

It should be understood that FIG. 5 illustrates a structure of the flow distribution unit 500 merely by way of example. In some embodiments, the distribution chamber 510 and the distribution array 520 in the flow distribution unit 500 may be arranged perpendicular to a cross section of an end of the microchannel unit 212. In yet some embodiments, the distribution chamber 510 and the distribution array 520 in the flow distribution unit 500 may be arranged parallel to a cross section of an end of the microchannel unit 212. In yet some embodiments, one of the distribution chamber 510 and the distribution array 520 in the flow distribution unit 500 may be parallel to a cross section of an end of the microchannel unit 212, while the other one may be perpendicular to the cross section. The present disclosure is not limited thereto.

In summary, through the flow distribution unit described above, the electrolyte can quickly and uniformly fill the plurality of channels in the microchannel unit completely. That is, the electrolyte can fully fill the microchannel unit to form a liquid barrier, thereby achieving liquid-phase isolation between hydrogen and oxygen and avoiding hydrogen-oxygen mixing.

FIG. 6 is a schematic diagram of a system 600 for an electrochemical reaction according to another embodiment of the present disclosure.

As shown in FIG. 6, the system 600 includes three electrochemical reaction subsystems, including a first electrochemical reaction subsystem 610, a second electrochemical reaction subsystem 620, and a third electrochemical reaction subsystem 630. The first electrochemical reaction subsystem 610 and the second electrochemical reaction subsystem 620 share a third bipolar plate 602. The second electrochemical reaction subsystem 620 and the third electrochemical reaction subsystem 630 share a fourth bipolar plate 604.

The electrochemical reaction subsystems can be stacked through the bipolar plates, so as to enable industrial production of the system for the electrochemical reaction according to the embodiment of the present disclosure.

In summary, the system for the electrochemical reaction according to the embodiment of the present disclosure can safely and efficiently achieve hydrogen production by water electrolysis with a small interelectrode spacing. Moreover, since the microchannel unit with the rigidity satisfying the predetermined condition can completely isolate oxygen and hydrogen generated by water electrolysis to avoid a risk of oxygen-hydrogen mixing. Therefore, the system provided by the present disclosure can operate under ambient pressure, which reduces energy consumption.

The system for the electrochemical reaction according to the present disclosure may also serve as a fuel cell. According to some embodiments of the present disclosure, the first electrode 214 and the second electrode 216 in the system 200 shown in FIG. 2 may be catalytically active electrodes, such as platinum-carbon (Pt/C) catalytic electrodes, iridium oxide (IrO₂) catalytic electrodes, or any other electrodes suitable for fuel cells. By supplying hydrogen and oxygen to the first electrode 214 and the second electrode 216, respectively, corresponding electrochemical reactions occur at the first electrode 214 and the second electrode 216, and an electric current is generated.

For example, when the system 200 is used as a fuel cell with the first electrode 214 as a positive electrode and the second electrode 216 as a negative electrode, oxygen is supplied to the first electrode 214 to allow an oxygen reduction reaction (ORR) at the first electrode 214, and hydrogen is supplied to the second electrode 216 to allow a hydrogen oxidation reaction (HOR) at the second electrode 216. Hydroxide ions generated at the first electrode 214 then move through the electrolyte in the microchannel unit 212 toward the second electrode 214 to react with hydrogen ions at the second electrode 214 to produce water. Correspondingly, electrons flow out from the second electrode 216 and flow into the first electrode 214 through, for example, conductive devices (for example, conductive devices included in the system 200, including the first gas diffusion layer 224, the first bipolar plate 234, the second gas diffusion layer 226, and the second bipolar plate 236 shown in FIG. 2, and/or any conductive devices external to the system suitable for the present disclosure), so as to generate an electric current.

The embodiments of the present disclosure have been described above. The above description is exemplary, not exhaustive. The present disclosure is not limited to the disclosed embodiments. It is apparent to those of ordinary skill in the art that many modifications and variations may be made without departing from the scope and spirit of the described embodiments. The terms used herein are selected to optimally explain principles of the embodiments, practical applications, or technical improvements in the market, or to enable other persons of ordinary skill in the art to understand the embodiments disclosed herein.

The above are merely optional embodiments of the present disclosure, and are not intended to limit the present disclosure, and various modifications and changes may be made by those skilled in the art to the present disclosure. Any modifications, equivalent substitutions, improvements, etc. made within the spirit and principle of the present disclosure should be included within the scope of protection of the present disclosure.

## Claims

1. A system for an electrochemical reaction, comprising: at least one electrochemical reaction subsystem, wherein the at least one electrochemical reaction subsystem comprises:
a first electrode;
a second electrode; and
a microchannel unit that is arranged between the first electrode and the second electrode and configured for flowing of electrolytes, where
in sidewalls of the microchannel unit that face the first electrode and the second electrode respectively each have a microporous structure; and the microchannel unit is configured to possess rigidity satisfying a predetermined condition to avoid deformation of the microchannel unit during the electrochemical reaction.

2. The system according to claim 1, wherein the microchannel unit comprises a plurality of channels, whereby an electrolyte flowing in from a first end of the microchannel unit flows out from a second end of the microchannel unit through the plurality of channels.

3. The system according to claim 2, wherein the first end of the microchannel unit is located above the second end of the microchannel unit; and the plurality of channels are each made of at least one selected from the group consisting of a metal, a ceramic, and a rigid plastic.

4. The system according to claim 1, wherein the microchannel unit comprises:
a fluid flow guide piece; and
a porous membrane covering an outer surface of the fluid flow guide piece.

5. The system according to claim 4, wherein the fluid flow guide piece is made of a metal foam or a ceramic foam.

6. The system according to claim 4, wherein a pore size of the fluid flow guide piece is larger than a pore size of the porous membrane,
Wherein the pore size of the fluid flow guide piece is 10 µm to 2,000 µm and preferably 50 µm to 200 µm; and
wherein the pore size of the porous membrane is no more than 100 µm and preferably 1 µm to 20 µm.

7. The system according to claim 1, further comprising:
a flow distribution unit, wherein the flow distribution unit is connected to the first end of the microchannel unit, whereby an electrolyte is capable of being uniformly distributed through the flow distribution unit to the microchannel unit.

8. The system according to claim 7, wherein the flow distribution unit comprises a distribution chamber and a distribution array; and
the distribution array is located between the distribution chamber and the microchannel unit, and the distribution array comprises a plurality of spaced openings.

9. The system according to claim 1, wherein the first electrode and the second electrode are both gas diffusion electrodes; and
a distance between the first electrode and the second electrode is no more than 2 mm and preferably no more than 1 mm.

10. The system according to claim 1, wherein the system is an electrolytic cell.

11. The system according to claim 1, wherein the system is a fuel cell.

12. A method for conducting an electrochemical reaction using the system according to any one of claims 1 to 11, comprising:
supplying the electrolyte such that the electrolyte is uniformly introduced into the microchannel unit; and
allowing the electrolyte to exude through the microporous structures on the sidewalls of the microchannel unit to come into contact with the first electrode and the second electrode.
